# FASCICULE DE BREVET EUROPEEN

(11) **EP 3 390 855 B1**
(45) Date de publication et mention de la délivrance du brevet: **13.07.2022**
(21) Numéro de dépôt: 16809847.3
(22) Date de dépôt: 15.12.2016
(51) Int. Cl.: F16D 65/00, F16B 5/06, F16B 21/08, F16D 55/226

(54) **ETRIER DE FREIN A DISQUE EQUIPE D'UNE PLAQUE PROTECTRICE INTEGRANT DES PLOTS DE FIXATION AU CORPS D'ETRIER**
SCHEIBENBREMSSATTEL, DER MIT EINER SCHUTZPLATTE MIT STIFTEN ZUR BEFESTIGUNG AM BREMSSATTELKÖRPER AUSGESTATTET IST
DISC-BRAKE CALIPER EQUIPPED WITH A PROTECTIVE PLATE INCORPORATING STUDS FOR ATTACHMENT TO THE CALIPER BODY

(30) Priorité: 16.12.2015 FR 1562487
(43) Date de publication de la demande: 24.10.2018
(73) Titulaire: Hitachi Astemo France, 93700 Drancy (FR)
(72) Inventeur: LABARRE, Xavier, 49250 Saint Georges Du Bois (FR); MONTEGU, Didier, 94420 LE PLESSIS TREVISE (FR); KONGO KONDE, Ange, 49100 Angers (FR)
(74) Mandataire: Brevalex
(86) Numéro de dépôt international: PCT/EP2016/081276
(87) Numéro de publication internationale: WO 2017/102997

(56) Documents cités:
- EP-A1- 2 514 989
- DE-A1- 4 101 514
- DE-A1- 10 027 783
- DE-A1-102006 033 240
- DE-A1-102013 020 750
- FR-A1- 2 629 527
- US-A1- 2004 148 757

## Description

### DOMAINE TECHNIQUE

L'invention se rapporte à un étrier de frein à disque de véhicule automobile, un tel étrier portant un actionneur ainsi que des plaquettes ou garnitures pour les presser contre le disque sur activation du frein.

### ÉTAT DE LA TECHNIQUE ANTÉRIEURE

Un tel étrier comprend un corps en matériau moulé incluant une base portant un actionneur et une première plaquette ou garniture de freinage, cette base étant prolongée par une voûte se terminant par plusieurs doigts qui portent une seconde plaquette ou garniture opposée à la première.

Lorsque l'actionneur est activé, il presse la première plaquette contre le disque de freinage. Comme un tel étrier est typiquement monté flottant c'est-à-dire mobile en translation perpendiculairement au plan du disque qu'il équipe, les efforts s'équilibrent de sorte que les deux plaquettes opposées sont pressées de manière équilibrée contre les deux faces du disque.

Pour que le freinage soit efficace, il importe que le corps d'étrier présente une rigidité mécanique élevée, afin qu'il se déforme le moins possible sous l'effet des efforts presseurs exercés par l'actionneur. C'est la raison pour laquelle le corps d'un tel étrier est typiquement une pièce issue de moulage pour présenter une rigidité mécanique élevée, et dans laquelle sont réalisés différents usinages.

Dans ce contexte, le logement de l'actionneur qui est formé dans la base du corps d'étrier nécessite d'aléser la pièce brute issue de moulage, ce qui implique de passer un outillage entre les doigts pour accéder à la face de la base qui est interne au corps d'étrier, c'est-à-dire située en vis-à-vis des doigts.

C'est la raison pour laquelle les doigts portant la seconde plaquette sont espacés les uns des autres, de manière à permettre le passage d'un outil pour aléser le logement de l'actionneur dans la base du corps.

Dans le cas d'un étrier comprenant un actionneur unique il comporte deux doigts pour délimiter un espacement d'accès permettant d'aléser l'unique logement de l'actionneur dans la base du corps (voir par exemple le document DE102006033240).

Si l'étrier comporte deux actionneurs, qui sont alors situés côte à côte dans la base du corps, il comporte trois doigts délimitant un premier et un second espacement permettant respectivement l'accès pour aléser le logement du premier actionneur et l'accès pour aléser le logement du second actionneur dans la base du corps.

L'objet de l'invention est d'apporter une solution permettant de fixer un couvercle ou plaque protectrice cachant ces doigts de manière à obstruer l'espace vide qui les sépare afin notamment d'éviter l'entrée de poussières dans cette région.

### EXPOSÉ DE L'INVENTION

A cet effet, l'invention a pour objet à un étrier de frein à disque, comprenant un corps en matériau moulé incluant une base prolongée par une voûte et des doigts prolongeant cette voûte, une plaque protectrice qui est fixée et rapportée contre les doigts pour les couvrir, ce corps comportant au moins deux trous, la plaque protectrice comportant au moins deux plots cylindriques s'engageant chacun dans un trou correspondant du corps pour assurer la fixation de cette plaque au corps, caractérisé en ce que chaque plot comporte au moins un ergot radial formant griffe de rétention du plot dans le trou, en ce que la plaque protectrice est une tôle métallique découpée et emboutie pour y former les deux plots qu'elle comporte, et en ce que chaque ergot radial a une forme de patte délimitée par une découpe formée dans la paroi du plot cylindrique qui le porte, cette découpe ayant une forme correspondant à celle de la lettre U, chaque patte ayant une extrémité libre orientée vers une face interne de la plaque et déployée radialement pour constituer une griffe de blocage.

Avec cet agencement, la plaque protectrice présente un coût de fabrication limité, et son montage se limite à la mettre en regard des doigts du corps d'étrier avec ses plots en vis-à-vis des trous formés dans ces doigts puis à la presser contre ces doigts afin d'engager complètement les plots dans les trous.

L'invention a également pour objet un étrier ainsi défini, dans lequel la plaque protectrice est une plaque de tôle comportant des plots cylindriques issus d'opérations de découpe et d'emboutissage.

L'invention a également pour objet un étrier ainsi défini, dans lequel chaque ergot radial a une forme de patte délimitée par une découpe formée dans la paroi du plot cylindrique qui le porte, cette découpe ayant une forme correspondant à celle de la lettre U, chaque patte ayant une extrémité libre orientée vers une face interne de la plaque et déployée radialement pour constituer une griffe de blocage.

L'invention a également pour objet un étrier ainsi défini, dans lequel chaque plot comporte trois ergots régulièrement espacés autour de l'axe du plot qui les porte.

L'invention a également pour objet un frein, comprenant un étrier ainsi défini ainsi qu'un disque de freinage.

### BRÈVE DESCRIPTION DES DESSINS

La figure 1 est une vue d'ensemble du corps de l'étrier selon l'invention ;
La figure 2 est une vue d'ensemble de la plaque protectrice montrant sa face externe ;
La figure 3 est une vue d'ensemble du corps de l'étrier selon l'invention équipé de sa plaque protectrice ;
La figure 4 est une vue d'ensemble de la plaque protectrice selon sa face interne ;
La figure 5 est une vue latérale d'un plot de la plaque protectrice selon l'invention ;
La figure 6 est une vue en coupe du plot de la plaque protectrice engagé dans un perçage correspondant.

### EXPOSÉ DÉTAILLÉ DE MODES DE RÉALISATION PARTICULIERS

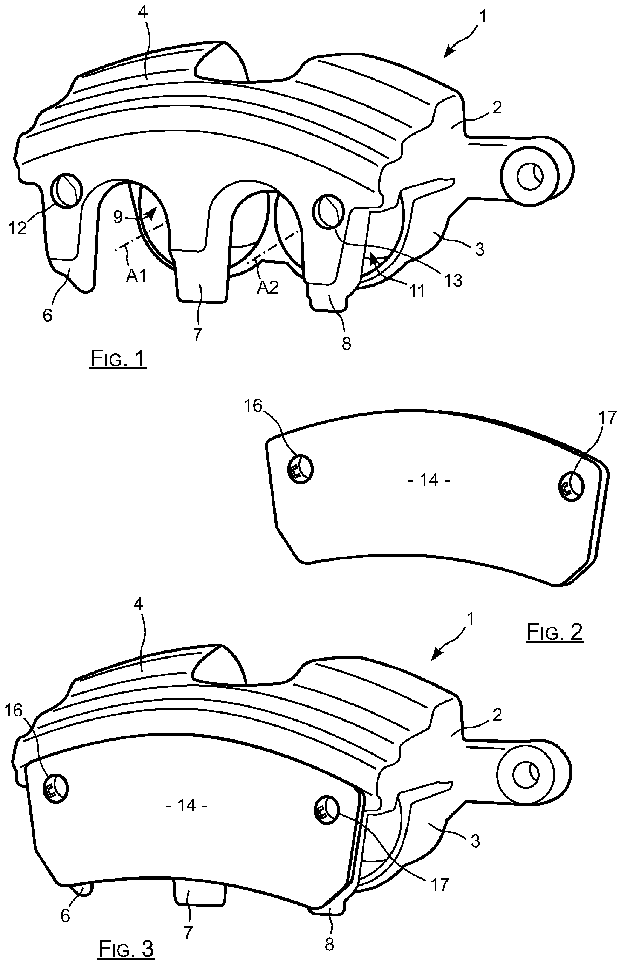

L'étrier de frein selon l'invention qui est représenté sur la figure 1 où il est repéré par 1 comporte un corps 2 incluant une base 3 prolongée par une voûte 4 qui est elle-même prolongée par trois doigts repérés par 6, 7 et 8.

Comme visible sur la figure 1, la base 3 comporte deux logements 9 et 11 destinés à recevoir deux actionneurs correspondants non représentés. Chaque logement est un trou alésé pour recevoir par exemple un piston hydraulique. L'alésage du premier logement 9 est assuré en engageant un outillage correspondant entre les doigts 6 et 7 selon l'axe A1, et l'alésage du second logement 11 est assuré en engageant un outillage entre les doigts 7 et 8 selon l'axe A2.

Comme visible sur la figure 1, le premier doigt 6 comporte un perçage borgne 12 au niveau de sa base, c'est-à-dire au niveau de la portion par laquelle ce doigt est raccordé à la voûte 4, ce perçage étant formé dans la face externe du doigt, c'est-à-dire la face qui est opposée à la base 3. Le dernier doigt 8 comporte lui aussi un perçage borgne 13 au niveau de sa base et sur sa face externe. Chaque perçage ou alésage borgne 12, 13 est délimité par un flanc cylindrique de relativement faible longueur, et il est fermé par une face de fond avantageusement conique.

Ces deux perçages 12 et 13 sont destinés à recevoir des moyens de fixation d'une plaque protectrice ou couvercle 14 qui est représentée seule dans la figure 2.

Cette plaque de fixation ou couvercle 14 qui apparaît seule sur la figure 2 est formée à partir d'une tôle métallique plane qui est découpée et emboutie pour y former deux plots cylindriques 16, 17 destinés à sa fixation aux doigts du corps d'étrier, ces plots 16, 17 s'engageant dans les trous 12 et 13 de l'étrier.

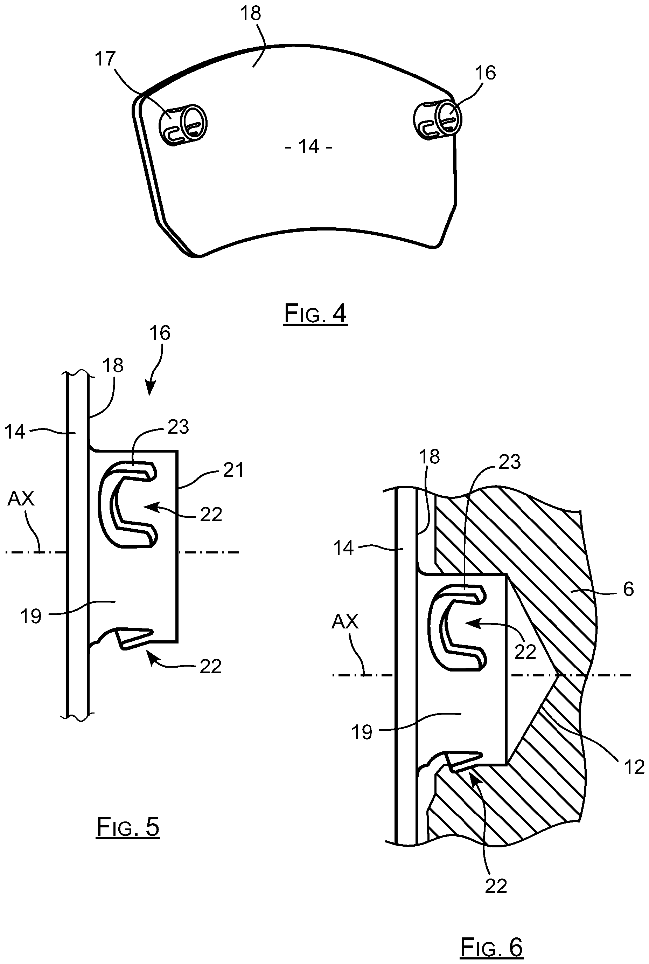

Chaque plot 16, 17 comporte une base cylindrique qui dépasse de la face intérieure 18 de la plaque 14 en s'étendant selon une direction normale à celle-ci, comme visible sur la figure 4, et qui présente un diamètre extérieur légèrement inférieur au diamètre interne des trous 12 et 13.

Comme visible sur la figure 5, le plot 16 comporte une base cylindrique ou collerette 19 d'orientation AX normale à la face interne 18. Cette collerette 19 est obtenue par emboutissage d'une tôle plane dans laquelle est formée la plaque protectrice, de sorte qu'elle est délimitée à une extrémité par le corps de la plaque 14, et à son extrémité par un bord circulaire 21

Cette base cylindrique 19 comporte des ergots 22 qui dépassent radialement vers l'extérieur. Ces ergots 22 qui sont régulièrement répartis autour de l'axe AX de révolution, sont agencés pour bloquer le plot 16 dans le perçage 12 en venant s'ancrer dans la face cylindrique interne de ce perçage.

Comme visible sur les figures 5 et 6, chaque ergot 22 est délimité par une découpe 23 ayant une forme correspondant à celle de la lettre U et qui est faite dans la paroi constituant la collerette 19. Cette découpe est orientée pour avoir les branches de la lettre U au voisinage du bord libre 21 de la collerette 19, et la base de la lettre U réunissant ces branches au voisinage du corps de la plaque 14.

L'ergot 22 a une forme de patte ayant sa base proche du bord 21 et son extrémité libre au voisinage de la face 18 et cette patte est inclinée vers l'extérieur, c'est-à-dire de sorte que son extrémité libre est plus éloignée de l'axe AX que sa base.

Chaque ergot 22 a ainsi son extrémité libre qui dépasse de la paroi externe cylindrique délimitant le corps de la collerette 19, pour que son extrémité libre constitue une griffe. Cette griffe retient ou bloque le plot 16 lorsque celui-ci est engagé dans le perçage 12, du fait qu'elle est alors en appui contre la face interne cylindrique de ce perçage 12.

Dans l'exemple des figures, la découpe a la forme de la lettre U pour former l'ergot. Une forme de découpe selon la lettre W permet de constituer deux griffes pour présenter une meilleure accroche. Le nombre d'ergots qui est de deux dans l'exemple des figures est augmenté ou diminué en fonction de la tenue mécanique souhaitée.

Autrement dit, en cas d'application d'un effort tendant à écarter la plaque 14 des doigts qui la portent, les ergots 22 exercent un effort de réaction qui s'oppose à cet écartement en interdisant au plot 16 de sortir du perçage 12, le plot 16 étant ainsi encliqueté dans le perçage 12.

Comme on l'aura compris, le plot 17 est identique au plot 16, il comporte lui aussi une collerette comportant trois ergots dépassant latéralement pour constituer des griffes assurant sa rétention et son blocage dans le perçage 13 dans lequel il s'engage.

D'une manière générale, le montage de la plaque sur le corps d'étrier qu'elle équipe consiste principalement à l'appliquer contre les doigts en engageant les plots 16 et 17 respectivement dans les trous 12 et 13 de ces doigts, et à exercer une pression sur la plaque 14 au niveau de ses plots 16 et 17 pour les engager complètement dans les trous en question.

Comme indiqué plus haut, la plaque 14 est fabriquée à partir d'une tôle métallique qui est découpée et emboutie avec des matrices appropriées pour délimiter son pourtour ainsi que les plots de blocage qu'elle comporte, et qui constituent ses moyens de fixation aux doigts du corps d'étrier.

Dans l'exemple des figures, le corps d'étrier comporte deux perçages 12 et 13 formés au niveau de la base des doigts 6 et 8, et la plaque 14 comporte deux plots de fixation correspondants 16 et 17. Le nombre de perçages et de plots peut être augmenté pour améliorer encore la tenue de la plaque, en fonction notamment des dimensions du corps d'étrier. Par exemple, dans le cas d'un étrier dont la base porte plus de deux actionneurs, le nombre de perçages et de plots pourra avantageusement être augmenté.

Pour renforcer l'accroche des ergots dans les perçages de l'étrier une gorge est avantageusement usinée à la hauteur appropriée dans ces derniers pour que les griffes de plots de blocage viennent s'y déployer.

Nomenclature :
1 : étrier
2 : corps d'étier
3 : base de l'étrier
4 : voûte de l'étrier
6 : premier doigt de l'étrier
7 : deuxième doigt de l'étrier
8 : dernier doigt de l'étrier
9 : premier logement d'actionneur
11 : second logement d'actionneur
12 : perçage borgne
13 : perçage borgne
14 : plaque protectrice
16 : plot cylindrique
17 : plots cylindrique
18 : face intérieure de la plaque protectrice
19 : base cylindrique ou collerette du plot
21 : bord circulaire du plot
22 : ergots
23 : découpe
A1 : axe du premier actionneur
A2 : axe du second actionneur
AX : axe du plot

## Revendications

1. Etrier (1) de frein à disque, comprenant un corps (2) en matériau moulé incluant une base (3) prolongée par une voûte (4) et des doigts (6, 7, 8) prolongeant cette voûte (4), une plaque protectrice (14) qui est fixée et rapportée contre les doigts (6, 7, 8) pour les couvrir, ce corps (2) comportant au moins deux trous (12, 13),la plaque protectrice (14) comportant au moins deux plots cylindriques (16, 17) s'engageant chacun dans un trou correspondant (12, 13) du corps (2) pour assurer la fixation de cette plaque (14) au corps (2), **caractérisé en ce que** chaque plot (16, 17) comporte au moins un ergot radial (22) formant griffe de rétention du plot (16, 17) dans le trou (12, 13), **en ce que** la plaque protectrice (14) est une tôle métallique découpée et emboutie pour y former les deux plots (16, 17) qu'elle comporte, et **en ce que**
chaque ergot radial (22) a une forme de patte délimitée par une découpe (23) formée dans la paroi du plot cylindrique (16, 17) qui le porte, cette découpe (23) ayant une forme correspondant à celle de la lettre U, chaque patte ayant une extrémité libre orientée vers une face interne (18) de la plaque (14) et déployée radialement pour constituer une griffe de blocage.

2. Etrier selon l'une des revendications précédentes, dans lequel chaque plot (16, 17) comporte trois ergots (22) régulièrement espacés autour de l'axe du plot (16, 17) qui les porte.

3. Frein de véhicule automobile comprenant un disque de freinage équipé d'un étrier selon l'une des revendications précédentes.

## Patentansprüche

1. Sattel (1) einer Scheibenbremse, umfassend einen Körper (2) aus geformtem Material einschließlich einer Basis (3), die mit einem Gewölbe (4) verlängert ist, und Fingern (6, 7, 8), die dieses Gewölbe (4) verlängern, eine Schutzplatte (14), die an den Fingern (6, 7, 8) angebracht ist, um sie abzudecken, wobei der Körper (2) mindestens zwei Löcher (12, 13) umfasst, die Schutzplatte (14) mindestens zwei zylindrische Vorsprünge (16, 17) umfasst, die jeweils ein entsprechendes Loch (12, 13) des Körpers (2) in Eingriff nehmen, um die Befestigung dieser Platte (14) am Körper (2) sicherzustellen, **dadurch gekennzeichnet, dass** jeder Vorsprung (16, 17) mindestens einen radialen Stift (22) umfasst, der eine Haltekralle des Vorsprungs (16, 17) in dem Loch (12, 13) bildet, und dass die Schutzplatte (14) ein Metallblech ist, das zugeschnitten und gestanzt ist, um dort die beiden Vorsprünge (16, 17) zu bilden, die sie trägt, und dass
jeder radiale Stift (22) eine Laschenform aufweist, die durch eine in der Wand des zylindrischen Vorsprungs (16, 17), die ihn trägt, gebildete Aussparung (23) begrenzt wird, wobei diese Aussparung (23) eine Form aufweist, die der des Buchstaben U entspricht, wobei jede Lasche ein freies Ende aufweist, das zu einer Innenfläche (18) der Platte (14) gerichtet ist und radial eingesetzt ist, um eine Blockagekralle zu bilden.

2. Sattel nach einem der der vorangehenden Ansprüche, wobei jeder Vorsprung (16, 17) drei Stifte (22) umfasst, die um die Achse des Vorsprungs (16, 17), der sie trägt, regelmäßig beabstandet sind.

3. Kraftfahrzeugbremse, umfassend eine Scheibenbremse, die mit einem Sattel nach einem der vorangehenden Ansprüche ausgestattet ist.

## Claims

1. A disc brake caliper (1), comprising a body (2) of moulded material including a base (3) extended by an arch (4) and fingers (6, 7, 8) extending this arch (4), a protective plate (14) which is attached and secured against the fingers (6, 7, 8) to cover them, this body (2) including at least two holes (12, 13), the protective plate (14) including at least two cylindrical studs (16, 17) each engaging in a corresponding hole (12, 13) of the body (2) to ensure attachment of this plate (14) to the body (2),
**characterised in that** each stud (16, 17) includes at least one radial lug (22) acting as a claw for holding the stud (16, 17) in the hole (12, 13), **in that** the protective plate is a cut and stamped sheet-metal plate in order to form the studs (16, 17), and **in that** each radial lug (22) is in the form of a tab delimited by a cutout (23) formed in the wall of the cylindrical stud (16, 17) carrying it, this cutout (23) having a shape corresponding to that of the letter U, each tab having a free end pointing to an inner face (18) of the plate (14) and radially deployed to make up a blocking claw.

2. The caliper according to the preceding claims, wherein each stud (16, 17) includes three lugs (22) evenly spaced around the axis of the stud (16, 17) carrying them.

3. An automobile vehicle brake comprising a braking disc equipped with a caliper according to one of the preceding claims.
